# EUROPÄISCHE PATENTSCHRIFT

(11) **EP 1 485 551 B1**
(45) Veröffentlichungstag und Bekanntmachung des Hinweises auf die Patenterteilung: **05.10.2005**
(21) Anmeldenummer: 02729972.6
(22) Anmeldetag: 07.03.2002
(51) Int. Cl.: E04F 15/20, E04F 15/02

(54) **PANEEL, INSBESONDERE FU BODENPANEEL MIT SCHALLDÄMMUNG**
PANEL, PARTICULARLY A FLOOR PANEL WITH SOUND INSULATION
PANNEAU, NOTAMMENT PANNEAU DE PLANCHER INSONORISE

(43) Veröffentlichungstag der Anmeldung: 15.12.2004
(73) Patentinhaber: Fritz Egger GmbH & Co, 3105 Unterradlberg (AT)
(72) Erfinder: STEINWENDER, Martin, A-2380 Perchtoldsdorf (AT)
(74) Vertreter: Rox, Thomas
(86) Internationale Anmeldenummer: PCT/EP2002/002514
(87) Internationale Veröffentlichungsnummer: WO 2003/074817

(56) Entgegenhaltungen:
- DE-U- 20 108 668
- GB-A- 1 103 895

## Beschreibung

Die vorliegende Erfindung betrifft ein Paneel mit Schalldämmung, insbesondere ein hartes Fußbodenpaneel, insbesondere für einen Laminatfußboden, und ein Verfahren zum Herstellen eines Paneels mit einer Schalldämmung.

Es ist bekannt, die ungünstigen Schalleigenschaften von Laminatfußböden dadurch zu verbessern, spezielle Matten zwischen den Laminatfußboden und die Unterkonstruktion (beispielsweise Estrich) zu legen. Dadurch soll einerseits der Trittschall - die Schallweitergabe an den Estrich - und der Raumschall - die Rückstrahlung von Schallenergie in den über dem Boden befindlichen Raum - verbessert werden. Die ungünstigen Eigenschaften der Laminatfußbodenpaneelen entstehen durch die hohe Dichte des verwendete hochdichten oder mitteldichten Fasermaterials (HDF- bzw. MDF-Platte).

In der Regel sind für die Schalldämmung unterschiedliche Matten im Hinblick auf ihre Dichte und im Hinblick auf ihre Eigenschaften vorzusehen. Diese Matten werden in einem separaten Produktionsverfahren hergestellt und dann entweder im Zuge der Bodenverlegung lose unter den Fußboden gelegt oder mit diesem bauseits verklebt, um zusätzliche Verbesserungen zu erreichen. Aus dem Stand der Technik ist ebenso bekannt, die Matten im Zuge der Herstellung von Fußbodenpaneelen mit diesen zu verkleben, wodurch sich eine Erleichterung für die Verlegung des Bodens ergibt.

Aus der DE 201 08 668 U1 ist es bekannt, ein Laminatfußbodenpaneel rückseitig mit einem Material zur Schalldämmung zu versehen, wobei in das Material Füllstoffe eingebracht werden können, deren Dichte unterhalb derer liegt, die das Material zur Schalldämmung aufweist. Das Material zur Schalldämmung wird dabei im flüssigen Zustand aufgebracht.

Ausgehend davon liegt der vorliegenden Erfindung das technische Problem zugrunde, ein Verfahren zum Herstellen eines Paneels sowie ein Paneel selbst anzugeben, das gegenüber dem Stand der Technik verbesserte schalltechnische Eigenschaften aufweist.

Das zuvor aufgezeigte technische Problem wird erfindungsgemäß durch ein Verfahren nach Anspruch 1 gelöst. Weitere vorteilhafte Ausgestaltungen dieses Verfahrens sind in den Unteransprüchen angegeben.

Die Erfindung betrifft daher ein Verfahren zum Herstellen eines Paneels mit einer Schalldämmung, insbesondere eines Laminatfußbodenpaneels, bei dem in einem ersten Verfahrensabschnitt das Paneel hergestellt wird, bei dem in einem zweiten Verfahrensabschnitt die Schalldämmung durch Aufbringen mindestens eines flüssigen Materials auf die Paneelunterseite hergestellt wird und bei dem mit dem Material der aufgetragenen Schalldämmung Füllstoffe verbunden werden, deren Dichte größer als die Dichte des Materials der Schalldämmung ist, wobei sich das Material der Schalldämmung mit der Paneelunterseite durch zumindest teilweises Erhärten verbindet.

Die Erfindung zeichnet sich dadurch aus, dass die schalldämmende Schicht vor dem Verbinden mit der Paneelunterseite nicht als eigenständige Matte vorliegt, sondern erst im Zuge der Herstellung auf der Paneelrückseite ausgebildet wird. Es entfällt daher ein Produktionsschritt, wodurch die Herstellung verbilligt und vereinfacht wird.

Ebenso wird das aufgezeigte technische Problem durch ein Paneel mit einer Schalldämmung mit den Merkmalen des Anspruches 13 gelöst, wobei auch hier vorteilhafte Ausgestaltungen des Paneels in den Unteransprüchen angeführt sind.

Dazu wird auf die fertige Fußbodenpaneelrückseite ein flüssiges oder verflüssigbares Material aufgetragen. Dies kann in bevorzugter Weise vollflächig, raupenförmig oder netzartig erfolgen.

Im folgenden wird die Erfindung anhand von Ausführungsbeispielen näher erläutert, wozu auf die beigefügte Zeichnung Bezug genommen wird. In der Zeichnung zeigen
- Fig. 1: in einer schematischen dreidimensionalen Darstellung zwei Paneelen mit unterschiedlich aufgebrachten Schalldämmungen und
- Fig. 2: im Schnitt verschiedene Beispiele von Anordnungen von Schalldämmungen.

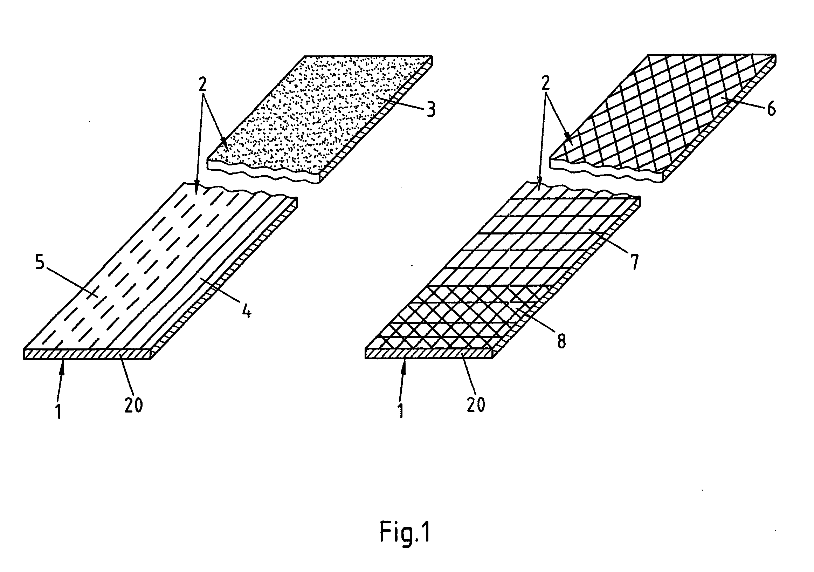

Fig. 1 zeigt verschiedene Ausführungsbeispiele von Paneelen mit Schalldämmungen, die nach dem erfindungsgemäßen Verfahren hergestellt worden sind.

Das Paneel besteht hauptsächlich aus der Materialschicht 20, die auch schichtweise aufgebaut sein kann und Laminatschichten enthalten kann. Die in Fig. 1 nach unten gerichtete Paneeloberseite 1 entspricht der Sichtseite bei der Verwendung der Paneele, die in Fig. 1 nach oben gerichtete Unterseite 2 trägt die Schalldämmung. Diese kann einem vollflächigen Auftrag 3 entsprechen oder einem raupenförmigen Auftrag 4 und 5, wobei beim Auftrag 5 die einzelnen Raupen bzw. Materialstränge nicht durchgängig vorhanden sind. Der netzartige Auftrag kann in zu den Außenkanten des Paneels diagonaler Ausführung, siehe Bezugszeichen 6, in paralleler Ausführung, siehe Bezugszeichen 7 oder in einer gemischten Ausführung, siehe Bezugszeichen 8, aufgebracht werden.

Die Abstände der einzelnen Aufträge bei raupen- und netzförmiger Ausführung können auf sich ausbildende Schwingungsknoten abgestimmt werden, um ein schalltechnisches Optimum in bestimmten Wellenlängenbereichen zu erzielen. Dabei kann beispielsweise von einem Schallfrequenzbereich von ca. 1,0 bis 4 kHz und einer Schallgeschwindigkeit im Paneelmaterial von ca. 0,5 bis 3,5 km/s ausgegangen werden. Die Abmessungen der Netzstruktur wird dann an die Grundwellenlängen im Meter- bzw. 10 cm-Bereich und an deren Obertöne mit kürzeren Wellenlängen angepasst, um eine möglichst gute Schalldämmung zu erreichen. Dabei kann auch ein über die Fläche variierender Netzabstand gewählt werden.

Das verflüssigbare Material kann beispielsweise ein Schmelzkleber (auf Polivinylacetat-Basis oder Reaktivschmelzkleber auf Polyurethan-Basis) sein, es eignen sich aber auch flüssige Materialien wie Elastomere, insbesondere 2-Komponentenelastomere (wie z.B. Polyurethane). Die genannten Materialien erhärten schnell bei einer nachfolgenden Abkühlung und verbinden sich somit mit der Oberfläche der Paneelunterseite.

Um die schalltechnischen Eigenschaften zu verbessern besteht die Möglichkeit Füllstoffe mit hoher Dichte einzubauen. Dazu eignen sich mineralische Füllstoffe (Baryt, Quarzsand, Titanoxid) und metallische Füllstoffe (Eisen, Aluminium). Die Füllstoffe können im Zuge der Herstellung als eigene Schicht aufgetragen werden. Dazu werden diese auf die verflüssigte Masse aufgestreut und durch das Erhärten des Materials mit dieser verbunden.

Eine andere Möglichkeit ist, das Material bereits mit den Füllstoffen vor dem Auftragen auf das Paneel zu vermengen, wodurch eine homogene Mischung von Füllstoff und Material erreicht wird.

Es ist auch denkbar, mehrere verschiedene Lagen von Materialien zu applizieren, wie beispielsweise Materialien mit verschiedenen Füllstofftypen.

Zudem kann auf die noch flüssige Masse eine bahnförmige Lage aufgebracht werden. Das kann beispielsweise eine Folie zur Dampfsperre sein (Polyethylen-Folie, Aluminiumfolie), eine Trittschallmatte (extrudiertes Polyethylen, Weich-PVC-Folie) oder auch ein Karton.

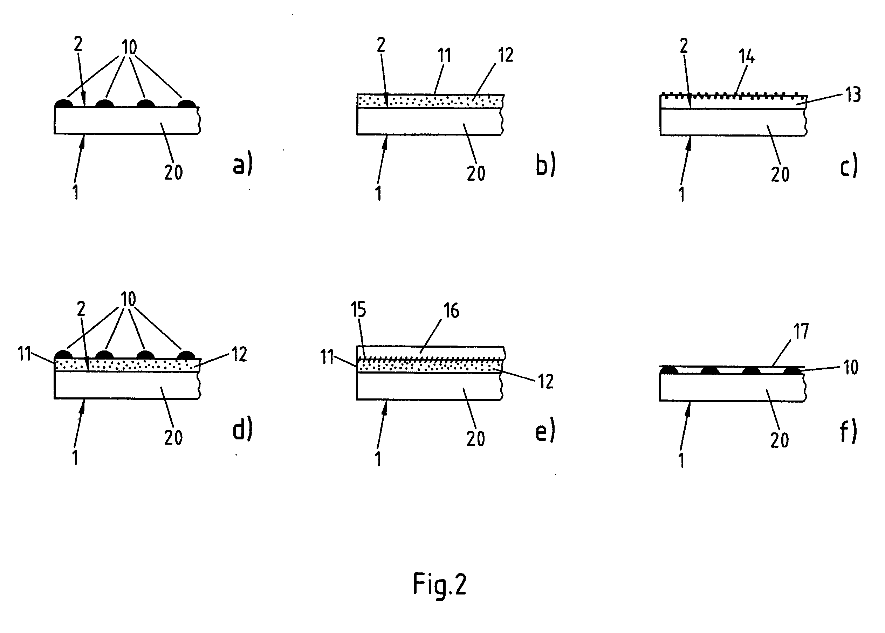

Fig. 2 zeigt Schnitte von Paneelen mit jeweils einer Materialschicht 20 und damit verbundene verschiedene Ausführungsformen von Schalldämmungen.

Bei Fig. 2a ist das Material 10 raupenförmig und ohne zusätzlich Füllstoffe ausgeführt.

Fig. 2b besteht aus einem vollflächigen Auftrag eines Materials 11, in der Füllstoffe 12 dispergiert sind. Die Füllstoffe 12 sind hier schematisch durch Punkte dargestellt.

In Fig. 2c besteht die Schalldämmung aus eines homogenen Materials 13, auf dem Füllstoffe 14 als separate Schicht oberflächlich appliziert sind. Die Füllstoffe 14 sind hier schematisch durch die Punkte dargestellt.

Fig. 2d zeigt eine Kombination von 2 Lagen von Materialien, wobei die erste Lage aus einer Mischung aus Material 11 und Füllstoff 12 besteht und die zweite Lage aus einem nicht gefüllten Material 12, die raupenförmig aufgetragen ist.

Fig. 2e zeigt ebenso eine mehrlagige Ausführung bestehend aus einer ersten Lage analog zu Beispiel 2d), einer separaten Lage von Füllmittel 15, welche hier schematisch durch schräge Striche angedeutet ist, und einer abschließenden Lage 16, die keine Füllstoffe aufweist.

Beispiel 2f zeigt eine auf die Schalldämmung 10 aufgebrachte Folie 17, die ebenso schalldämmende Eigenschaften aufweisen kann.

## Patentansprüche

1. Verfahren zum Herstellen eines Paneels mit einer Schalldämmung, insbesondere eines Laminatfußbodenpaneels,
- bei dem in einem ersten Verfahrensabschnitt das Paneel hergestellt wird,
- bei dem in einem zweiten Verfahrensabschnitt die Schalldämmung durch Aufbringen mindestens eines flüssigen Materials auf die Paneelunterseite (2) hergestellt wird und
- bei dem mit dem Material der aufgetragenen Schalldämmung Füllstoffe (12,14,15) verbunden werden, deren Dichte größer als die Dichte des Materials der Schalldämmung ist,
- wobei sich das Material der Schalldämmung mit der Paneelunterseite (2) durch zumindest teilweises Erhärten verbindet.

2. Verfahren nach Anspruch 1,
bei dem das flüssige Material vollflächig aufgetragen wird.

3. Verfahren nach Anspruch 1,
bei dem das flüssige Material abschnittsweise auf die Paneelunterseite (2) aufgetragen wird.

4. Verfahren nach Anspruch 3,
bei dem das flüssige Material raupenförmig aufgetragen wird.

5. Verfahren nach Anspruch 4,
bei dem das flüssige Material netzartig aufgetragen wird.

6. Verfahren nach Anspruch 5,
bei dem die Netzstruktur an die im vorliegenden Schallfrequenzbereich auftretenden Abstände von Schwingungsknoten innerhalb des Paneelmaterials angepasst wird.

7. Verfahren nach einem der Ansprüche 1 bis 6,
bei dem ein Schmelzkleber aufgetragen wird, der vor dem Auftragen durch Erhitzen verflüssigt wird.

8. Verfahren nach einem der Ansprüche 1 bis 6,
bei dem ein Elastomer, insbesondere ein 2-Komponentenelastomer aufgetragen wird.

9. Verfahren nach einem der Ansprüche 1 bis 8,
bei dem die Füllstoffe (12,14,15) auf die äußere Fläche des Materials der Schalldämmung aufgebracht werden.

10. Verfahren nach einem der Ansprüche 1 bis 8,
bei dem die Füllstoffe mit dem flüssigen Material vor deren Aufbringen vermengt werden.

11. Verfahren nach einem der Ansprüche 1 bis 10,
bei dem mindestens zwei verschiedene Lagen von flüssigen Materialien auf die Paneelunterseite (2) aufgebracht werden, die sich miteinander und/oder mit der Paneelunterseite (2) verbinden.

12. Verfahren nach einem der Ansprüche 1 bis 11,
bei dem auf die aufgebrachte Schalldämmung eine vorproduzierte bahnförmige Lage aufgebracht wird.

13. Paneel, insbesondere Laminatfußbodenpaneel,
- mit einer das Paneel bildenden Materialschicht (20),
- mit einer mit der Paneelunterseite (2) verbundenen Schalldämmung,
- wobei die Schalldämmung nach einem Verfahren der Ansprüche 1 bis 12 hergestellt worden ist und
- wobei das Material der Schalldämmung Füllstoffe (12,14,15) aufweist,
**dadurch gekennzeichnet,**
- **dass** die Dichte der Füllstoffe größer als die Dichte des Materials der Schalldämmung ist.

14. Paneel nach Anspruch 13,
**dadurch gekennzeichnet,**
**dass** die Schalldämmung zumindest teilweise aus raupenförmigen Materialsträngen (4,5;10) besteht.

15. Paneel nach Anspruch 14,
**dadurch gekennzeichnet,**
**dass** die Materialstränge (4,5;10) netzartig verteilt angeordnet sind.

16. Paneel nach Anspruch 14 oder 15,
**dadurch gekennzeichnet,**
**dass** die Netzstruktur an die im Schallfrequenzbereich von ca. 1,0 bis 4 kHz auftretenden Abstände von Schwingungsknoten innerhalb des Paneelmaterials angepasst ist.

17. Paneel nach einem der Ansprüche 13 bis 16,
**dadurch gekennzeichnet,**
**dass** die Schalldämmung aus einem Schmelzkleber besteht.

18. Paneel nach einem der Ansprüche 13 bis 16,
**dadurch gekennzeichnet,**
**dass** die Schalldämmung aus einem Elastomer besteht, insbesondere aus einem 2-Komponentenelastomer.

19. Paneel nach einem der Ansprüche. 13 bis 18,
**dadurch gekennzeichnet,**
**dass** mindestens zwei verschiedene Lagen von Schalldämmungen mit der Paneelunterseite (2) verbunden sind.

20. Paneel nach einem der Ansprüche 13 bis 19,
**dadurch gekennzeichnet,**
**dass** mit der Schalldämmung eine vorproduzierte bahnförmige Lage verbunden ist.

## Claims

1. Process for manufacturing a panel of a sound insulation, in particular of a laminated floor panel,
- Wherein the panel is manufactured in an initial process section,
- Wherein in a second process section the sound insulation is manufactured by depositing at least one molten material on the underside (2),
- Wherein fillers, whose density is greater than the density of the sound insulation material (12, 14, 15) are bound with the material of the coated sound insulation,
- With which the sound insulation material binds itself to the panel underside by at least partial hardening.

2. Process according to claim 1, wherein the molten material is deposited all over.

3. Process according to claim 1, wherein the molten material is deposited in sections on the underside of the panel (2)

4. Process according to claim 3, wherein the molten material is deposited as a series of beads,

5. Process according to claim 4, wherein the molten material is deposited as a mesh,

6. Process according to claim 5, wherein the mesh structure is adapted to the pitch of vibration nodal points occurring in the present acoustic frequency range within the panel material.

7. Process according to one of claims 1 to 6, wherein a hot-melt adhesive is deposited, which is liquefied by heating prior to the coating.

8. Process according to one of claims 1 to 6, wherein an elastomer, in particular a 2-component elastomer, is deposited.

9. Process according to one of claims 1 to 8, wherein the fillers (12, 13, 14) are deposited on the outer surface of the sound insulation.

10. Process according to one of claims 1 to 8, wherein the fillers are blended with the molten material prior to their deposition.

11. Process according to one of claims 1 to 10, wherein at least two different layers of molten material are deposited onto the underside of the panel, which bind with themselves and / or with the underside of the panel.

12. Process according to one of claims 1 to 11, wherein a pre-fabricated path-shaped layer is deposited onto the coated sound insulation.

13. Panel, in particular laminated floor panel,
- With a material substrate (20) forming the panel,
- With a sound insulation (2) joined to the panel underside,
- Whereby the sound insulation has been manufactured in accordance with a process according to claim 1 and
- Wherein the material exhibits the sound insulation fillers (12, 13, 14),
**Characterised in,**
- **That** the density of the fillers is greater than the density of the sound insulation material.

14. Panel according to claim 13, **characterised in that** the sound insulation comprises at least partly of strands of beads (4, 5, 10).

15. Panel according to claim 14, **characterised in that** the material strands (4, 5, 10) are arranged to be formed as a mesh.

16. Process according to one of claims 14 or 15, **characterised in that** the mesh structure is adapted to the pitch of vibration nodes occurring in the acoustic frequency range of around 1.0 to 4 kHz.

17. Panel according to one of claims 13 to 16, **characterised in that** the sound insulation comprises a hot-melt adhesive.

18. Panel according to claims 13 to 16, **characterised in that** the sound insulation comprises an elastomer, in particular a 2-component elastomer.

19. Panel according to claims 13 to 18, **characterised in that** at least two different layers of sound insulation are joined to the panel underside (2).

20. Panel according to one of claims 13 to 19, **characterised in that** a pre-fabricated layer is joined to the sound insulation.

## Revendications

1. Procédé de fabrication d'un panneau comportant une isolation phonique, en particulier un panneau pour plancher stratifié,
- dans lequel le panneau est réalisé au cours d'une première étape,
- dans lequel l'isolation phonique est réalisée au cours d'une deuxième étape, par l'application d'au moins un matériau liquide sur la face inférieure (2) du panneau et
- dans lequel des matières de charge (12, 14, 15) sont liées au matériau de l'isolation phonique appliqué, leur densité étant supérieure à la densité du matériau de l'isolation phonique,
- le matériau de l'isolation phonique se liant à la face inférieure (2) du panneau par durcissement au moins partiel.

2. Procédé selon la revendication 1, dans lequel le matériau liquide est appliqué sur toute la surface.

3. Procédé selon la revendication 1, dans lequel le matériau liquide est appliqué par zones sur la face inférieure (2) du panneau.

4. Procédé selon la revendication 3, dans lequel le matériau liquide est appliqué en formant des chenilles.

5. Procédé selon la revendication 4, dans lequel le matériau liquide est appliqué en formant un réseau.

6. Procédé selon la revendication 5, dans lequel la structure en réseau est adaptée aux distances entre les noeuds de vibrations, générées dans le présent domaine de fréquences acoustiques, à l'intérieur du matériau du panneau.

7. Procédé selon l'une quelconque des revendications 1 à 6, dans lequel on applique une colle thermofusible qui est fluidifiée par chauffage avant l'application.

8. Procédé selon l'une quelconque des revendications 1 à 6, dans lequel on applique un élastomère, en particulier un élastomère à deux composants.

9. Procédé selon l'une quelconque des revendications 1 à 8, dans lequel les matières de charge (12, 14, 15) sont appliquées sur la surface extérieure du matériau de l'isolation phonique.

10. Procédé selon l'une quelconque des revendications 1 à 8, dans lequel les matières de charge sont mélangées avec le matériau liquide avant leur application.

11. Procédé selon l'une quelconque des revendications 1 à 10, dans lequel au moins deux couches différentes de matériaux liquides sont appliquées sur la face inférieure (2) du panneau, lesquelles se lient entre elles et/ou avec la face inférieure (2) du panneau.

12. Procédé selon l'une quelconque des revendications 1 à 11, dans lequel une couche préfabriquée en forme de bande est déposée sur l'isolation phonique appliquée.

13. Panneau, en particulier panneau pour plancher stratifié,
- comportant une couche de matériau (20) formant le panneau,
- comportant une isolation phonique liée à la face inférieure (2) du panneau,
- l'isolation phonique ayant été réalisée conformément à un procédé selon les revendications 1 à 12, et
- le matériau de l'isolation phonique comportant des matières de charge (12, 14, 15),
**caractérisé en ce que** la densité des matières de charge est supérieure à la densité du matériau de l'isolation phonique.

14. Panneau selon la revendication 13, **caractérisé en ce que** l'isolation phonique est formée au moins en partie par des cordons de matière (4, 5 ; 10) en forme de chenilles.

15. Panneau selon la revendication 14, **caractérisé en ce que** les cordons de matière (4, 5 ; 10) sont disposés en forme de réseau.

16. Panneau selon la revendication 14 ou 15, **caractérisé en ce que** la structure en réseau est adaptée aux distances entre les noeuds de vibrations, générées dans le domaine des fréquences acoustiques de 1,0 à 4 kHz environ, à l'intérieur du matériau du panneau.

17. Panneau selon l'une quelconque des revendications 13 à 16, **caractérisé en ce que** l'isolation phonique est formée par une colle thermofusible.

18. Panneau selon l'une quelconque des revendications 13 à 16, **caractérisé en ce que** l'isolation phonique est formée par un élastomère, en particulier un élastomère à deux composants.

19. Panneau selon l'une quelconque des revendications 13 à 18, **caractérisé en ce qu'**au moins deux couches différentes d'isolation phonique sont liées avec la face inférieure (2) du panneau.

20. Panneau selon l'une quelconque des revendications 13 à 19, **caractérisé en ce qu'**une couche préfabriquée en forme de bande est liée à l'isolation phonique.
